(19) Europäisches Patentamt European Patent Office Office européen des brevets

(11) **EP 1 977 811 A1**

(12) **EUROPEAN PATENT APPLICATION**
published in accordance with Art. 158(3) EPC

(43) Date of publication:
08.10.2008 Bulletin 2008/41

(51) Int Cl.:
*B01D 39/14* (2006.01)

(21) Application number: 06711916.4

(22) Date of filing: 18.01.2006

(86) International application number:
PCT/JP2006/300647

(87) International publication number:
WO 2007/083370 (26.07.2007 Gazette 2007/30)

(84) Designated Contracting States:
AT BE BG CH CY CZ DE DK EE ES FI FR GB GR HU IE IS IT LI LT LU LV MC NL PL PT RO SE SI SK TR

(71) Applicant: Nissei Bio Co., Ltd.
Eniwa-shi
Hokkaido 061-1374 (JP)

(72) Inventor: MATSUNAGA, Masaji
Tokyo 130-0012 (JP)

(74) Representative: Senior, Janet et al
Abel & Imray
20 Red Lion Street
London WC1R 4PQ (GB)

(54) **FILTER FOR AIR CONDITIONER CAPABLE OF REMOVING TOXIC SUBSTANCE**

(57) [PROBLEMS] To provide a filter simultaneously having the effects of not only being capable of effectively remove toxic substances, such as benzo[a]pyrene, contained in outdoor and indoor air but also being substantially free from any deterioration of dust collection effectiveness. [MEANS FOR RESOLVING PROBLEMS] There is provided a filter for air conditioner to be fitted to an air passage of air conditioner including means for not only introduction of outdoor air in equipment interior but also circulation of air within the equipment interior, which filter is **characterized by** being composed of a filter base material of nonwoven fabric monolayer sheet or nonwoven-fabric-sheet-including laiminate and, retained on the filter base material, DNA microparticles capable of intercalation trapping of toxic substances, such as benzo[a] pyrene, the DNA microparticles consisting of microparticles of 50 to 2000 µm average diameter having a double helix DNA attached to support surface as desired through a binder, the DNA microparticles contained in an amount of 0.05 to 20 mass% based on the mass of the filter base material.

**Description**

TECHNICAL FIELD

The present invention relates to a filter that is installed to an air conditioner equipped with a mechanism for circulating air in an equipment interior (also termed simply an "air conditioner" below). More particularly it relates to an air conditioner filter that is able to effectively remove toxic substances such as pyrenes from the air of room interiors, vehicle interiors and the like.

BACKGROUND ART

Due to considerations of electricity-saving, air conditioners equipped with a mechanism that circulates air in the equipment interior have become mainstream in recent years, and car air conditioners equipped with similar mechanisms have also been fitted in passenger vehicles. In the air passages of such air conditioners, filters for removing dust from the air are usually installed.
Of late however, attention has been focused on the human impacts of toxic substances such as benzo[a]pyrene (BaP) that are contained in air. Accordingly there is a desire for filters capable of effectively removing such toxic substances contained in air to be installed in air conditioners. As a filter capable of removing such toxic substances, the present applicants have proposed a harmful substance removal filter composed of double helix DNA supported in a fibrous filter material (Patent Document 1). In such harmful substance removal filter, the double helix DNA is, for example, supported in the filter base material in a free state or via ultraviolet light exposure, and its removal effect of harmful substances is corroborated in the embodiments.
Patent Document 1: WO 2004/091753 pamphlet

DISCLOSURE OF THE INVENTION

Problem to be Solved by the Invention

In an air conditioner equipped with a circulation mechanism, air is circulated repeatedly in an equipment interior simultaneously with intake of outside air. Because of this, toxic substances, which are contained mainly in the outside air, are relatively diluted, and the concentration of toxic substances per the total volume of air passing through the filter is low. Hence, what is required is for the filter's toxic substance removal ability to be adequately exerted at such low concentrations. Further, the effective collection of dust, which is the filter's essential function, must be fully assured. However, the harmful substance removal filter set forth in Patent Document 1 was developed mainly with attention to use as a cigarette filter, not with the aim of being capable of application to air conditioners equipped with a circulation mechanism. Thus, further innovation and research were needed in order to obtain a filter for air conditioners equipped with a circulation mechanism that would achieve both superior toxic substance removal effect and high dust collection effect at low concentration.

Means for Solving the Problem

Accordingly, in order to achieve more effective removal of toxic substances, the present applicants examined many and various modes of effective contacting between double helix DNA and air. In the course of so doing they first of all devised a filter that supported DNA material that was produced by immersing the filter base material in a solution of double helix DNA, then allowing it to dry. When installed and used in an air conditioner, this filter was found to roughly satisfy the desired levels of toxic substance removal effects and dust collection effects, provided that the DNA solution was of high concentration. It was also discovered that the airflow performance of the filter was good when the diameter of the filter fibers and the weight of the base material were within a particular range of values. Nonetheless, there was a limit on the degree to which the DNA solution concentration could be raised, which is to say that there was an upper limit on the degree to which the toxic substance removal effect could be raised with the foregoing mode, and further improvement was necessary in order to obtain performance exceeding that upper limit, that is, performance that would achieve effective removal under conditions of extremely low presence ratios of toxic substances. Accordingly, the present applicants engaged in a further series of painstaking researches, as a result of which they discovered that by having the filter base material support DNA microparticles composed of double helix DNA adhering to a carrier, it was possible for a filter for an air conditioner equipped with a circulation mechanism to exert superior toxic substance removal effect even under conditions of extremely low presence ratios of toxic substances; and thereby arrived at the present invention. Specifically, an air conditioner filter according a first aspect of the present invention, which is installed to an air passage of an air conditioner that intakes outdoor air into an equipment interior and also has a mechanism for circulating air in the equipment interior, includes: a filter base material constituted from a monolayer sheet of nonwoven fabric, or from a laminate that includes nonwoven fabric sheets; and DNA microparticles that are supported in the filter base material and are capable of intercalation trapping of toxic substances such as benzo[a]pyrene, in which the DNA microparticles are constituted of microparticles of 50 to 2000 $\mu$m average diameter whose double helix DNA is made to adhere to the surfaces of a carrier, by means of a binder if necessary, and that the DNA microparticles are contained in an amount of 0.05 to 20% by mass based on the mass of the filter base material.

In a preferred mode of the air conditioner filter according to the first aspect of the present invention, a diameter X ($\mu$m) of nonwoven fabric fibers by which the DNA microparticles are supported, and a weight Y (g/m$^2$) of the filter base material per 10 mm thickness, satisfy the condition expressed by $15000 \leq X \cdot Y \leq 25000$ (X being 55 to 2050).

An air conditioner filter according to a second aspect of the present invention, which is installed to an air passage of an air conditioner that intakes outdoor air into an equipment interior and also has a mechanism for circulating air in the equipment interior, includes: a filter base material constituted from a monolayer sheet of nonwoven fabric, or from a laminate; and DNA material that is supported in the filter base material and is capable of intercalation trapping of toxic substances such as benzo[a]pyrene; in which the DNA material is made to adhere to the filter base material by bringing the filter base material into contact with a solution of double helix DNA that contains binder if necessary, then drying; and that the DNA material is contained in an amount of 0.05 to 20% by mass based on the mass of the filter base material.

In a preferred mode of the air conditioner filter according to the second aspect of the present invention, a diameter X ($\mu$m) of nonwoven fabric fibers by which the DNA material is supported, and a weight Y (g/m$^2$) of the filter base material per 10 mm thickness, satisfy the condition expressed by $500 \leq X \cdot Y \leq 1500$ (X being 5 to 50).

Also, the present invention relates especially to the above filters when installed in a room air conditioner or a car air conditioner.

Effects of the Invention

The present invention enables efficient removal of toxic substances such as benzo[a]pyrene that are contained in the outside air or in the indoor air by means of intercalation into double helix DNA, achieving efficient removal even under conditions of extremely low concentrations where toxic substances are present at levels of 100 ppm or less. In addition, there is substantially no impairment of the prime function of the filter, which is to collect dust. Further, with the aspect of the invention in which the filter base material is made to support double helix DNA in the form of DNA microparticles, the toxic substance removal effect is further heightened, even when toxic substances are present at levels of 10 ppm or less.

BRIEF DESCRIPTION OF THE DRAWINGS

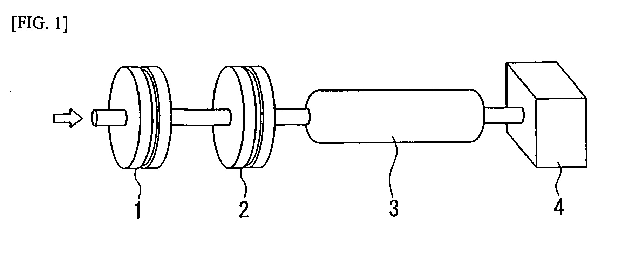

[FIG. 1] FIG. 1 is a schematic view illustrating an apparatus that is for trapping benzo[a]pyrene in the atmosphere and has a filter of the present invention.

BEST MODES FOR CARRYING OUT THE INVENTION

DNA microparticles used in the present invention are formed by making double helix DNA adhere to carrier surfaces. As a result of such rendering into microparticles, the specific surface area (per unit volume of the filter) at the places where the double helix DNA adheres increases, whereby more effective removal of toxic substances is achieved. Out of consideration for the filter's airflow performance, DNA microparticles with an average particle diameter in the range of 50 to 2000 $\mu$m are selected. With particle diameter less than 50 $\mu$m the filter would be prone to clogging, and with particle diameter exceeding 2000 $\mu$m the filter's airflow performance could drop. A more preferable size for the DNA microparticles is in the range of 300 to 800 $\mu$m for the average particle diameter.

The material and form of the carrier preferably used in the present invention are not particularly limited, provided that the structure thereof is such that the double helix DNA can adhere to the surfaces thereof, either by itself or by means of a binder. The carrier may for example be: a synthetic polymer and a natural polymer such as polystyrene, polyvinyl alcohol, polyvinyl chloride, polyethylene, cellulose, starch, natural rubber, gelatin, chitin, chitosan or acetate; or an inorganic substance such as silica, alumina, activated carbon, or diatom earth; or pulverized corncob; or a mixture of these. More preferably, the carrier used is cellulose beads or pulverized corncob. Also, the DNA microparticles are made to be supported by the filter base material using, for example, a method in which the thermal treatment is as gentle as possible so that to the extent possible the double helix structure of their double helix DNA will not be damaged.

Where necessary in order to prolong the usable period of the filter for example, the double helix DNA may be made to adhere to the surfaces of the carrier used for the DNA microparticles via another water-soluble polymer serving as binder, for example polyglycols such as polyethylene glycol or polypropylene glycol; trihydric alcohols such as glycerin; a poly(meth)acrylic compound such as sodium polyacrylate or sodium polymethacrylate, or a salt thereof; or a cellulose such as methyl cellulose or carboxymethyl cellulose, or a salt thereof.

The filter with DNA material supported therein has the advantage that its manufacturing process is simple, because the DNA material is made to be held in the fibrous surface of the filter simply by bringing the filter base material into contact with a DNA solution and then drying it. The DNA material is preferably supported evenly overall with regard to the filter base material, but may be supported at a particularly high concentration at the places that constitute flowpaths of the air containing the toxic substances. The bringing of the filter base material into contact with the double helix DNA solution may be effected by immersion, smearing or spraying for example, and the subsequent drying is carried out under relatively gentle temperature conditions. For the same reasons as in the case of the DNA microparticles, it is permissible to further add a binder to the double helix DNA solution. Examples of the binder that may be used in the present invention include the binders listed above and in particular a water soluble one that can adhere to both the DNA and the filter base material.

In the present invention, either of DNA microparticles or DNA material is supported, the double helix DNA must be contained in the filter in a particular amount. If the amount of double helix DNA contained is too small, the toxic substance removal effect will be inadequate. Conversely, too large an amount cannot be considered desirable in economic terms. From this consideration, the amount of double helix DNA contained is determined in the range of roughly 0.05 to 20% by mass based on the mass of the filter base material used. More preferably, the double helix DNA content will be in the range of roughly 0.5 to 15% by mass based on the mass of the filter base material.

The filter base material, whether it is made to support DNA microparticles or DNA material, may be manufactured using a method for manufacturing nonwoven fabrics. It is possible to employ the method of mixing in DNA microparticles, and having them supported, during the process of manufacturing the filter base material. As regards functionality of the filter of the present invention, it is desirable to assure dust collection effect as well as airflow performance. Accordingly, the size of the gaps between the fibers of the filter base material when the DNA microparticles or DNA material is supported therein is preferably adjusted to within such a range that both dust collection effect and airflow performance are assured. If the gaps are too large, the airflow performance rises but it is hard to obtain the prescribed dust collection effect, and conversely if the gaps are too small, the dust collection effect rises but it is hard to obtain the prescribed airflow performance. Upon studying more suitable nonwoven fabric fiber diameters and weights, the present applicants discovered that preferably the nonwoven fabric fibers' diameter X ($\mu$m) and the weight Y (g/m$^2$) of the filter base material per 10 mm thickness satisfies the rough condition $15000 \leq X \cdot Y \leq 25000$ (X being determined in the range of 55 to 2050 $\mu$m for practical purposes) in the case where DNA microparticles are supported, and satisfy the condition $500 \leq X \cdot Y \leq 1500$ (X being determined in the range of 5 to 50 $\mu$m for practical purposes) in the case where DNA material is supported. Thus, with low concentrations of 100 ppm or less of toxic substances in air, a filter of the present invention is capable of efficiently removing such toxic substances. And a filter in which DNA microparticles are supported can remove such toxic substances even more efficiently, at even lower concentrations of 10 ppm or less of toxic substances. Furthermore, since there is substantially no impairment of dust collection effect, a filter of the present invention is suited for use in an air conditioner equipped with a circulation mechanism.

Examples

The invention will now be described in further detail using examples. However, these examples do not limit the invention.

Example 1

100 g of pulverized corncob was impregnated evenly with 20 g of polyethylene glycol (PEG) 400. Then 1 g of double helix DNA in fine powder form was added and stirred in. Following that, the mixture was dried at around 40°C for three hours. Thereby, the double helix DNA was made to adhere to the surfaces of the pulverized corncob, so that DNA microparticles were obtained. The average diameter of such DNA microparticles was approximately 200 $\mu$m. Next, a nonwoven fabric sheet of polyester (fiber diameter: approximately 10 $\mu$m, weight per 10 mm of thickness: approximately 100 g/m$^2$) was immersed in PEG 400, and afterward lifted out, whereupon 6 g of the DNA microparticles was immediately spread on the nonwoven fabric sheet so as to be homogeneous over the whole thereof. Then by being dried for three hours at around 40°C, the nonwoven fabric sheet was made to support the DNA microparticles, and thereby a filter of the invention was obtained. The diameter of the filter's fibers was approximately 210 $\mu$m as measured with an electron microscope.

Example 2

100 g of pulverized corncob was impregnated evenly with 20 g of polyethylene glycol 400. Then 0.5 g of double helix DNA in fine powder form was added and stirred in. Following that, the mixture was dried at around 40°C for three hours. Thereby, the double helix DNA was made to adhere to the surfaces of the pulverized corncob, so that DNA microparticles were obtained. The average diameter of such DNA microparticles was approximately 60 $\mu$m. Next, 0.5 g of the DNA microparticles was homogeneously mixed into a nonwoven fabric sheet of polyamide (fiber diameter: approximately 5 $\mu$m, weight per 10 mm of thickness: approximately 300 g/m$^2$) so as to be supported therein, and a filter of the invention was thereby obtained. The diameter of the filter fibers was approximately 65 $\mu$m as measured with an electron microscope.

Example 3

1 g of double helix DNA in fine powder form was added to 100 g of cellulose acetate beads and stirred in. Thereby, the double helix DNA was made to adhere to the spaces between the multiple walls formed in the surfaces of the cellulose acetate beads, so that DNA microparticles were obtained. The average diameter of such DNA microparticles was approximately 1800 $\mu$m. Next, a nonwoven fabric sheet of polyester (fiber diameter: approximately 50 $\mu$m, weight per 10 mm of thickness: approximately 13 g/m$^2$) was immersed in sodium polymethacrylate solution (sodium polymethacrylate molecular mass: approximately 20000, solid content of solution: approximately 10% by mass), and afterward lifted out, whereupon 1.5 g of the DNA microparticles was immediately spread on the nonwoven fabric sheet so as to be homogeneous over the whole thereof. Then by being dried for three hours at around 40°C, the nonwoven fabric sheet was made to support the DNA microparticles, and thereby a filter of the present invention was obtained. The diameter of the filter fibers was approximately 1850 $\mu$m as measured with an electron microscope.

Example 4

Double helix DNA in fine powder form was dissolved in deionized water to prepare a double helix DNA solution of concentration 10% by mass. A nonwoven fabric sheet of polyester (weight per 10 mm of thickness: approximately 50 g/m$^2$) was immersed in such solution, and afterward lifted out. Then such sheet was dried at around 40°C for three hours. Thereby, the sheet was made to support the double helix DNA and a filter of the present invention was obtained (the supported double helix DNA constituting approximately 5% by mass based on the mass of the sheet). The diameter of the filter fibers was approximately 10 $\mu$m as measured with an electron microscope.

Comparative Example 1

A filter (fiber diameter: approximately 10 $\mu$m, weight per 10 mm of thickness: approximately 200 g/m$^2$) used for an indoor air conditioner was employed unchanged as the Comparative Example 1.

Comparative Examples 2-4

The filters of Comparative Examples 2 to 4 were each fabricated using the same methods as for Example 1, except that the structural values of each filter were altered to those shown in Table 1 below.

[Table 1]

Table 1 Structure of each filter in Example 1-4 and Comparative Examples 1-4

| Filter | Average diameter of DNA microparticles ($\mu$m) | Double helix DNA content (% by mass) |
|---|---|---|
| Example 1 | 200 | 5 |
| Example 2 | 60 | 0.1 |
| Example 3 | 1800 | 11.0 |
| Example 4 | - | 5 |
| Comparative Example 1 | - | - |
| Comparative Example 2 | 3000 | 0.1 |
| Comparative Example 3 | 10 | 0.1 |
| Comparative Example 4 | 200 | 0.01 |

Test Example 1: Measurement of Removal Effects of Benzo[a]pyrene in Atmosphere

This was a contrastive test to determine differences in the removal effects of toxic substances in the atmosphere between the filters of Examples 1 to 4 and the filters of Comparative Examples 1 to 4.

Test Method

The test apparatus I shown in FIG. 1 was assembled, constituted of the filter 1 of Example 1, a glass fiber filter 2, a resin column 3, and a constant-flow minipump 4, arranged in that order proceeding from the air inlet (marked with an arrow in the drawing). The glass fiber filter 2 was for trapping benzo[a]pyrene that passed through the filter 1, and the resin column 3 was for trapping benzo[a]pyrene that passed on through the glass fiber filter 2.
The above-described test apparatus I was installed at road intersections in S Ward of Tokyo, and a constant-flow minipump 0 was run to suction in atmospheric air at a flow of 1.0 L/min for 27.5 hours. After the test ended, the filter 1 of Example 1 and the glass fiber filter 2 were removed from the test apparatus I, wrapped in aluminum foil, and sealed in a polyethylene bag, in which they were stored at -80°C until immediately before analysis.

Method of Analyzing for Benzo[a]pyrene

The glass fiber filter 2 of the test apparatus I was taken out, cut up finely with scissors, and put into a screw-cap test tube. Using a whole pipette, 5.00 mL of dichloromethane was then added as extraction solvent, and the cap of the tube was screwed in tightly. The test tube was treated with ultrasonic waves for 10 minutes, after which the air bubbles were removed and, for additional 10 minutes, ultrasonic treatment was performed to extract the benzo[a]pyrene. The extraction liquid underwent centrifugation at 4°C, 3000 rpm for 10 minutes. Then 4 mL of its supernatant was transferred to another test tube, 70 $\mu$L of DMSO was added as PAH sublimation preventing agent, and the dichloromethane was removed by spraying such supernatant with nitrogen gas in a dry thermo unit. 930 $\mu$L of acetonitrile was added to the extract thus obtained to make a sample liquid, which was then subjected to separation analysis via HPLC. The conditions for such analysis were as set forth below.
Column: 4.6 mm diameter $\times$ 100 mm
Chromolith Performance RP-18e
Reserve column: 4.6 mm diameter $\times$ 10 mm Eclipse XDB-C 18
Column temperature: 40°C
Detector: Spectrofluorometer
Flow rate: 1.0 mL/min
Mobile phases: water 25% and acetonitrile 75%
Excitation wavelength: 290 nm
Emission wavelength: 430 nm
Next, the filter of Example 1 was taken out, and by performing the same
operations as for the glass fiber filter described above, except that methanol was used instead of dichloromethane as the extraction solvent, a sample solution was prepared which was then subjected to separation analysis via HPLC under the conditions set forth above. No benzo[a]pyrene was detected in the resin column of the test apparatus I. HPLC analysis was conducted on three samples in each case, and the values were averaged to yield the results.
The same test conducted on the filter of Example 1 was also conducted on each of the filters of Examples 2 to 4 and Comparative Examples 1 to 4, by replacing filter 1 of the test apparatus I with the respective filter in each case. The results are shown in Table 2. The BaP removal rate (%) in Table 2 is the amount of benzo[a]pyrene taken up by the test apparatus I, or more precisely, the amount of benzo[a]pyrene trapped by filter 1 (or the respective filters of Examples 1 to 4 or Comparative Examples 1 to 4, as applicable) as a proportion relative to the total of the amounts of benzo[a]pyrene trapped by filter 1 and by the glass fiber filter.

Test Example 2: Measurement of Dust Collection Efficiency and Pressure Loss

This was a contrastive test to determine differences in dust collection efficiency between the filters of Examples 1 to 4 and the filters of Comparative Examples 1 to 4, so as to determine the dust removal efficiencies of the filters.

Test Methods

Dust Collection Efficiency: the filters of Examples 1 to 4 and Comparative Examples 1 to 4 were each in turn placed in a wind tunnel, wind was induced with a fan, and the concentration of dust of 1 $\mu$m or more in the atmosphere upstream and downstream of each filter at wind velocity of 3 m/sec was measured with a particle counter. Dust collection efficiency was calculated using the following equation:

$$(\text{Upstream dust concentration - downstream dust concentration}) \big/ \text{Upstream}$$

$$\text{dust concentration} \times 100\ (\%)$$

This was conducted three times for each filter, and the values were averaged to yield the results.
Pressure Loss: the filters of Examples 1 to 4 and of Comparative Examples 1 to 4 were each in turn placed in a wind tunnel, wind was induced with a fan, and the pressure loss upstream and downstream of each filter at wind velocity of 3 m/sec was measured with a pressure drop meter. The foregoing dust collection efficiency and pressure loss tests were conducted three times for each filter, and the values were averaged to yield the results. The results are shown in Table 2.

Results and Discussion

[Table 2]

Table 2 Results for BaP trapping amount and dust collection efficiency of the filters

|  | Amount of BaP trapped (ng) | | BaP removal | Dust collection | Pressure loss |
|---|---|---|---|---|---|
|  | Filter 1 | Glass fiber filter 2 | rate (%) | efficiency (%) | (mmAq) |
| Example 1 | 0.68 | 0.74 | 47.9 | 77 | 6.0 |
| Example 2 | 0.49 | 0.93 | 34.5 | 80 | 6.7 |
| Example 3 | 0.89 | 0.53 | 62.7 | 75 | 5.8 |
| Example 4 | 0.63 | 0.79 | 44.4 | 73 | 5.7 |
| Comparative Example 1 | 0.24 | 1.18 | 16.9 | 75 | 8.7 |
| Comparative Example 2 | 0.40 | 1.02 | 28.2 | 74 | 11.6 |
| Comparative Example 3 | 0.39 | 1.03 | 27.5 | 72 | 12.5 |
| Comparative Example 4 | 0.25 | 1.17 | 17.6 | 73 | 6.2 |

The results in Table 2 show that the filter of Example 1, which did not contain double helix DNA, had an extremely low BaP removal rate, and would be difficult to use as a filter for an air conditioner equipped with a circulation mechanism.
Comparative Examples 2 and 3 were modes in which the double helix DNA content and the amount of DNA microparticles used were unchanged from those in Example 2, but the size of DNA microparticles was altered from 200 $\mu$m average diameter to 3000 $\mu$m and 10 $\mu$m respectively. From the high pressure-loss results of 11.6 mmAq and 12.5 mmAq for Comparative Examples 2 and 3, it is likely that these filters caused clogging that impaired the airflow performance.
Comparative Example 4 was a mode in which the filter of Example 1 had its double helix DNA content reduced down to 0.01 %. As a result, the BaP removal rate of Comparative Example 4 was at the markedly low level of 17.6%, almost the same as Comparative Example 1, which did not contain any double helix DNA. This shows that with such a low double helix DNA content, almost no BaP removal effect can be expected.
In contrast to the filters of Comparative Examples 1 to 4, the results for the filters of Examples 1 to 4 showed high BaP removal rates and ample dust collection efficiency and airflow performance. Further, calculating from the concentrations of BaP in the atmosphere and the BaP trapping amounts and removal rates of the various filters, it can be seen that the filter of Example 4 has a removal effect superior to Comparative Examples 1 to 4 even when the BaP concentration is at around 100 ppm or less. The results also show that, in Examples 1 to 3, still more excellent removal effects were obtained at even lower concentrations of around 10 ppm or less.

Description of the Reference Numerals

1    filter of the present invention
2    glass fiber filter
3    resin column
4    constant-flow minipump

**Claims**

1. An air conditioner filter which is installed to an air passage of an air conditioner that intakes outdoor air into an equipment interior and also has a mechanism for circulating air in the equipment interior, comprising:

   a filter base material constituted from a monolayer sheet of nonwoven fabric, or from a laminate that includes nonwoven fabric sheets; and
   DNA microparticles supported in the filter base material and capable of intercalation trapping of toxic substances such as benzo[a]pyrene; wherein
   the DNA microparticles is constituted of microparticles of 50 to 2000 $\mu$m average diameter whose double helix DNA is made to adhere to the surfaces of a carrier, by means of a binder if necessary, and the DNA microparticles are contained in an amount of 0.05 to 20% by mass based on the mass of the filter base material.

2. The air conditioner filter according to claim 1, wherein a diameter X ($\mu$m) of nonwoven fabric fibers by which the DNA microparticles are supported, and a weight Y (g/m$^2$) of the filter base material per 10 mm thickness, satisfy the condition expressed by $15000 \leq X \cdot Y \leq 25000$ (X being 55 to 2050).

3. An air conditioner filter which is installed to an air passage of an air conditioner that intakes outdoor air into an equipment interior and also has a mechanism for circulating air in the equipment interior, comprising:

   a filter base material constituted from a monolayer sheet of nonwoven fabric, or from a laminate; and
   DNA material that is supported in the filter base material and is capable of intercalation trapping of toxic substances such as benzo[a]pyrene; wherein
   the DNA material is made to adhere to the filter base material by bringing the filter base material into contact with a solution of double helix DNA that contains binder if necessary, then drying; and the DNA material is contained in an amount of 0.05 to 20% by mass based on the mass of the filter base material.

4. The air conditioner filter according to claim 3, wherein a diameter X ($\mu$m) of nonwoven fabric fibers by which the DNA material is supported, and a weight Y (g/m$^2$) of the filter base material per 10 mm thickness, satisfy the condition expressed by $500 \leq X \cdot Y \leq 1500$ (X being 5 to 50).

5. The filter according to any one of claims 1 to 4, installed in a room air conditioner.

6. The filter according to any one of claims 1 to 4, installed in a car air conditioner.

[FIG. 1]

<table>
<tr><td colspan="2"><b>INTERNATIONAL SEARCH REPORT</b></td><td colspan="2">International application No.<br><br>PCT/JP2006/300647</td></tr>
</table>

| A. CLASSIFICATION OF SUBJECT MATTER |
|---|
| *B01D39/14*(2006.01) |
| According to International Patent Classification (IPC) or to both national classification and IPC |

| B. FIELDS SEARCHED |
|---|
| Minimum documentation searched (classification system followed by classification symbols)<br>B01D39/14-39/18 |
| Documentation searched other than minimum documentation to the extent that such documents are included in the fields searched<br>Jitsuyo Shinan Koho　　　　1922-1996　Jitsuyo Shinan Toroku Koho　1996-2006<br>Kokai Jitsuyo Shinan Koho　1971-2006　Toroku Jitsuyo Shinan Koho　1994-2006 |
| Electronic data base consulted during the international search (name of data base and, where practicable, search terms used) |

C. DOCUMENTS CONSIDERED TO BE RELEVANT

| Category* | Citation of document, with indication, where appropriate, of the relevant passages | Relevant to claim No. |
|---|---|---|
| X<br>Y | WO 2004/091753 A1 (Nissei Bio Kabushiki Kaisha),<br>28 October, 2004 (28.10.04),<br>Description, page 5, 6th line from the bottom to page 12, line 6<br>& US 2004/211728 A1 | 1,3,5,6<br>2,4 |
| Y | JP 2004-124317 A (Toyobo Co., Ltd.),<br>22 April, 2004 (22.04.04),<br>Claims; examples<br>(Family: none) | 2,4 |
| Y | JP 2004-243250 A (Dynic Corp.),<br>02 September, 2004 (02.09.04),<br>Claims; examples<br>(Family: none) | 2,4 |

| ☒ Further documents are listed in the continuation of Box C. | ☐ See patent family annex. |
|---|---|

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br>28 February, 2006 (28.02.06) | Date of mailing of the international search report<br>14 March, 2006 (14.03.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/300647 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2003-509033 A (MAILLARD, Frederic),<br>11 March, 2003 (11.03.03),<br>Claims; Par. No. [0015]<br>& WO 2001/19210 A1 & EP 1213977 A1<br>& US 6866045 B1 | 1-6 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2004091753 A